# FASCICULE DE BREVET EUROPEEN

(11) **EP 4 551 962 B1**
(45) Date de publication et mention de la délivrance du brevet: **12.11.2025**
(21) Numéro de dépôt: 24725543.3
(22) Date de dépôt: 12.04.2024
(51) Int. Cl.: G01S 7/4861, G01S 7/4863, G01S 7/487, G01S 7/499, G01S 17/95, G01S 17/50

(54) **CAPTEUR OPTIQUE POUR DISPOSITIF LIDAR**
OPTISCHER SENSOR FÜR LIDAR-VORRICHTUNG
OPTICAL SENSOR FOR LIDAR DEVICE

(30) Priorité: 03.05.2023 FR 2304417
(43) Date de publication de la demande: 14.05.2025
(73) Titulaire: Airbus Defence and Space SAS, 31402 Toulouse Cedex 4 (FR)
(72) Inventeur: MARCHAIS, Denis, 31402 TOULOUSE CEDEX 4 (FR)
(74) Mandataire: Plasseraud IP
(86) Numéro de dépôt international: PCT/FR2024/050483
(87) Numéro de publication internationale: WO 2024/227988

(56) Documents cités:
- EP-A1- 3 428 684
- US-A1- 2022 373 690

## Description

### Domaine technique

La présente description concerne un capteur optique pour dispositif LIDAR, ainsi que le dispositif LIDAR qui incorpore au moins un tel capteur optique, et un satellite d'observation utilisant le dispositif LIDAR. Elle concerne aussi un procédé d'acquisition de profils de vitesse aéraulique qui utilise le capteur optique.

### Technique antérieure

Il est connu d'utiliser un dispositif LIDAR, pour «LIght Detection And Ranging» en anglais, ou dispositif de détection et de mesure de distance par la lumière, pour acquérir des profils de vitesse aéraulique à travers l'atmosphère terrestre. Pour cela, le dispositif LIDAR est embarqué à bord d'un satellite, et une ligne de visée de ce dispositif LIDAR est dirigée vers la Terre. Le brevet EP 0 907 284 déposé au nom d'Astrium SAS, enseigne un dispositif photosensible à couplage et accumulation de charges permettant de détecter une diffusion du rayonnement par des particules qui sont en suspension dans l'atmosphère, appelée diffusion de Mie, et une diffusion du rayonnement par des molécules qui sont contenues dans l'atmosphère, appelée diffusion de Rayleigh.

Concernant la diffusion de Mie, les particules diffusantes peuvent être des aérosols ou des grains solides tels que des grains de glace. Elles sont entrainées par le vent qui existe dans la zone concernée de l'atmosphère, et qui provoque un décalage Doppler pour la partie du rayonnement qu'elles rétrodiffusent. La partie de rayonnement qui est rétrodiffusée selon le mécanisme de Mie est transmise à travers un interféromètre de Fizeau.

Concernant la diffusion de Rayleigh, les molécules sont aussi entrainées par le vent qui existe dans la zone d'atmosphère où elles se trouvent, mais elles décrivent en plus un mouvement brownien. La partie rétrodiffusée du rayonnement qui est émis par le dispositif LIDAR, relative à la diffusion de Rayleigh, est transmise à travers deux interféromètres de Fabry-Pérot.

Un inconvénient du capteur optique utilisé à ce jour est que des charges électriques parasites peuvent être provoquées par le cadencement du fonctionnement de ce capteur optique, au niveau de cellules qui sont dédiées au transfert de charges photoélectriques avant accumulation d'impulsions successives. Les cellules défectueuses de ce type sont appelées «Hot Pixel due to Clock-Induced Charges» en anglais. Elles produisent des contributions aux signaux d'accumulation lus, qui ne correspondent pas à des charges de photodétection générées par du rayonnement. Il en résulte des erreurs qui affectent les résultats de mesure, qui peuvent être aléatoires ou systématiques, et qui augmentent avec la durée d'utilisation du capteur optique à bord du satellite.

EP 3 428 684 A1 propose une structure de dispositif LIDAR conçue pour émettre des séquences d'impulsions dans lesquelles des impulsions successives présentent entre elles des décalages fréquentiels.

US 2022/373690 A1 décrit un détecteur atmosphérique qui utilise une fenêtre temporelle de détection, cette fenêtre temporelle de détection étant programmable.

### Problème technique

Un but de la présente invention est alors de proposer un nouveau capteur optique qui améliore la situation par rapport au bilan qui vient d'être rappelé, pour une utilisation au sein d'un dispositif LIDAR permettant d'effectuer des mesures de vitesse aéraulique selon les mécanismes de diffusion de Mie et de Rayleigh.

### Résumé de l'invention

Pour atteindre ce but ou un autre, un premier aspect de l'invention propose un nouveau dispositif LIDAR selon la revendication 1.

Chaque capteur optique du dispositif LIDAR de l'invention peut notamment être de type CMOS, pour «Complementary Metal-Oxyde-Semiconductor», ou de type CCD, pour «Charge-Coupled Device». En outre, de façon générale, le module de détection d'au moins une colonne et le module d'intégration peuvent être réalisés sous forme matérielle, ou «hardware» en anglais, ou sous forme logicielle, ou «software», ou sous forme d'une combinaison matérielle et logicielle.

Un tel capteur optique permet d'exclure lors de l'obtention des tensions représentatives, des cellules qui seraient identifiées comme défectueuses, notamment de telles cellules où apparaitraient des charges électriques parasites dues au cadencement du fonctionnement du capteur optique.

Un premier avantage est qu'un même modèle de capteur optique est utilisé pour détecter une frange produite par la diffusion de Mie, ou des charges de photodétection produites par la diffusion de Rayleigh, en procurant à chaque fois une amélioration du rapport signal-sur-bruit. Une réduction de coût de conception et de développement du capteur optique en résulte.

Un second avantage de l'invention est que pour détecter le décalage spectral de la raie élargie de type Rayleigh, le capteur optique du dispositif LIDAR de l'invention permet de réaliser un premier regroupement des charges de photodétection pour chaque colonne de la matrice des photodétecteurs du capteur optique, puis un second regroupement sur toutes les colonnes pour chaque zone d'intérêt. Le résultat de ces deux regroupements successifs de charges de photodétection est de fournir une mesure d'intensité lumineuse qui est intégrée sur chaque zone d'intérêt, tout en supprimant le bruit de lecture qui est associé individuellement à chaque colonne. Le rapport signal-sur-bruit qui en résulte est amélioré.

Lorsqu'un dispositif LIDAR conforme à l'invention est utilisé, chaque exposition au rayonnement des photodétecteurs peut être réalisée pendant au moins un intervalle de temps déterminé, cet intervalle de temps étant mémorisé et réglé en fonction d'au moins une épaisseur déterminée d'atmosphère à analyser.

Lorsque le capteur optique du dispositif LIDAR de l'invention est de type CMOS, les photodétecteurs génèrent chacun leur tension représentative des charges de photodétection, et le module d'intégration somme sélectivement des tensions générées dans chaque zone d'intérêt, où chaque zone d'intérêt peut correspondre à un sous-ensemble qui est réduit également par rapport à l'ensemble des lignes.

Lorsque le capteur optique du dispositif LIDAR de l'invention est alternativement de type CCD, le module d'intégration réalise au moins deux sommations de charges générées respectivement par au moins deux zones étendues distinctes qui couvrent respectivement les deux zones d'intérêt, préalablement à la génération des deux tensions.

De façon générale pour l'invention, notamment lorsque le capteur optique est de type CMOS ou de type CCD, les zones d'intérêt peuvent être des zones prédéterminées et invariables dans la matrice.

Aussi de façon générale pour l'invention, chaque zone d'intérêt peut former un rectangle qui correspond à toute ou partie d'une hauteur des colonnes de leur sous-ensemble réduit de colonnes.

Lorsque le capteur optique du dispositif LIDAR de l'invention est de type CMOS, chaque zone d'intérêt peut présenter différentes hauteurs en correspondance avec les différentes colonnes de l'image, et peut présenter différentes largeurs en correspondance avec les différentes lignes de l'image.

De façon générale, les zones d'intérêt peuvent posséder des formes respectives qui sont différentes.

Aussi de façon générale, chaque zone d'intérêt peut posséder une forme non-convexe. Au sens de l'invention, on entend par forme non-convexe une forme pour laquelle il existe au moins une corde qui relie deux points d'une limite périphérique de cette forme non-convexe et qui passe par un point intermédiaire n'appartenant pas à la forme non-convexe.

Dans des modes de réalisation où le capteur optique de l'invention est de type CCD, le dispositif LIDAR peut comprendre :
- un premier registre de regroupement, relié à la matrice des photodétecteurs et adapté pour regrouper les charges de photodétection par colonnes de cette matrice des photodétecteurs, pour chaque exposition ;
- une première matrice de transfert, reliée au premier registre de regroupement et adaptée pour transférer des charges de photodétection regroupées qui ont été générées pendant des expositions successives de la matrice des photodétecteurs, séparément pour ces expositions ;
- une première matrice d'accumulation, reliée à la première matrice de transfert et de même taille que cette première matrice de transfert, et adaptée pour accumuler les charges de photodétection regroupées pour des répétitions successives d'une série formée par les expositions successives de la matrice des photodétecteurs ;
- un premier registre de lecture, relié à des sorties de colonnes de la première matrice d'accumulation ;
- un deuxième registre de regroupement, relié à la matrice des photodétecteurs et adapté pour regrouper les charges de photodétection par colonnes de cette matrice des photodétecteurs, pour chaque exposition ;
- un troisième registre de regroupement, adapté pour regrouper dans deux cellules, appelées macro-pixels, les charges de photodétection transmises par le deuxième registre de regroupement conformément à deux sous-ensembles séparés des colonnes de la matrice des photodétecteurs ;
- une seconde matrice de transfert, reliée au troisième registre de regroupement et adaptée pour transférer des contenus des macro-pixels qui ont été générés pendant des expositions successives de la matrice des photodétecteurs, séparément pour les deux macro-pixels ;
- une seconde matrice d'accumulation, reliée à la seconde matrice de transfert et de même taille que cette seconde matrice de transfert, et adaptée pour accumuler les contenus des macro-pixels pour des répétitions successives d'une série formée par les expositions successives de la matrice des photodétecteurs ; et
- un second registre de lecture, relié à des sorties de colonnes de la seconde matrice d'accumulation.

De façon générale, le capteur optique du dispositif LIDAR de l'invention peut être adapté pour sélectionner deux parties différentes de la matrice des photodétecteurs selon l'utilisation du capteur optique, et restreindre à chaque partie les charges de photodétection qui sont transformées en tensions représentatives. Dans ce cas, une première des parties de la matrice des photodétecteurs peut être sélectionnée pour l'utilisation du capteur optique où la position de la frange de rayonnement de Mie est détectée. Simultanément, une seconde des parties de la matrice des photodétecteurs, comprenant les zones d'intérêt, peut être sélectionnée pour l'utilisation du capteur optique où le décalage spectral de la raie élargie de type Rayleigh est détecté. Un capteur optique unique peut ainsi être utilisé pour les deux canaux de détection des diffusions de Mie et de Rayleigh, et ces diffusions de Mie et de Rayleigh peuvent encore être détectées simultanément.

Un deuxième aspect de l'invention propose un satellite qui comprend au moins un dispositif LIDAR conforme au premier aspect, ce dispositif LIDAR étant embarqué à bord du satellite.

Enfin, un troisième aspect de l'invention propose un procédé d'acquisition de profils de vitesse aéraulique à partir d'un satellite qui est en orbite autour de la Terre, le satellite étant conforme au troisième aspect de l'invention et le procédé comprenant les étapes suivantes :
- émettre des impulsions laser successives en direction de la Terre ;
- collecter une partie rétrodiffusée de chaque impulsion laser, appelée signal de rétrodiffusion et ayant une intensité variable en fonction d'une durée écoulée à partir d'une émission de l'impulsion laser, la durée écoulée correspondant à une propagation de l'impulsion laser et du signal de rétrodiffusion entre le satellite et une altitude de rétrodiffusion dans l'atmosphère terrestre ;
- pour chaque signal de rétrodiffusion qui est collecté, traiter ce signal de rétrodiffusion d'une part pour que des premières informations spectrales, associées à une rétrodiffusion de Mie, apparaissent sous forme de positions variables d'une frange d'interférence formée par un premier interféromètre, qui sont relatives à plusieurs premières valeurs de la durée écoulée à partir de l'émission de chaque impulsion laser, et d'autre part pour que des secondes informations spectrales, associées à une rétrodiffusion de Rayleigh, apparaissent sous forme de deux taches d'interférences d'intensités respectives variables, qui sont relatives à plusieurs secondes valeurs de la durée écoulée à partir de l'émission de chaque impulsion laser ; et
- déduire un premier profil de vitesse aéraulique à partir des premières informations spectrales, et un second profil de vitesse aéraulique à partir des secondes informations spectrales.

Optionnellement, une densité de particules diffusantes peut être déterminée en outre à partir des intensités respectives des deux taches d'interférences.

Optionnellement aussi, et lorsque les impulsions laser qui sont émises possèdent une polarisation identifiée, le procédé peut comprendre en outre de déterminer d'une manière qui est synchrone avec l'acquisition des canaux de Rayleigh et de Mie, un taux d'intensité de la partie rétrodiffusée de chaque impulsion laser qui existe pour la polarisation croisée. On entend par polarisation croisée la polarisation qui est orthogonale à celle de la partie rétrodiffusée de chaque impulsion laser correspondant à la polarisation identifiée des impulsions laser émises. De cette façon, l'énergie totale rétrodiffusée peut être connue, les impulsions émises par le LIDAR étant polarisées et le phénomène de rétrodiffusion étant susceptible de dépolariser le rayonnement rétrodiffusé.

Enfin, des intervalles de temps associés respectivement aux expositions de la matrice des photodétecteurs pour chaque impulsion laser qui est émise, peuvent correspondre à des intervalles déterminés de valeurs d'altitude, le long d'un chemin de propagation des impulsions laser dans l'atmosphère.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1] est un schéma synoptique d'un dispositif LIDAR conforme l'invention, qui montre aussi une application du dispositif LIDAR pour effectuer des mesures aérauliques dans l'atmosphère terrestre à partir d'un satellite ;
[Fig. 2] est un diagramme temporel d'intensité de rayonnement rétrodiffusé qui correspond à l'application du dispositif LIDAR montrée dans [Fig. 1] ;
[Fig. 3a] est un schéma qui montre des éléments constitutifs d'un capteur optique conforme à l'invention, pour une réalisation de type CCD de ce capteur optique, avec des indications pour un premier mode d'utilisation possible du capteur optique dans le cadre de l'application de [Fig. 1] ;
[Fig. 3b] correspond à [Fig. 3a] pour un second mode d'utilisation possible du même capteur optique, aussi dans le cadre de l'application de [Fig. 1] ; et
[Fig. 3c] illustre un autre mode d'utilisation possible du même capteur optique, encore dans le cadre de l'application de [Fig. 1], mais qui est mixte entre les modes d'utilisation de [Fig. 3a] et [Fig. 3b].

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques. Enfin, des éléments ou composants dont l'utilisation n'a pas de lien direct avec l'invention ne sont pas mentionnés ni décrits.

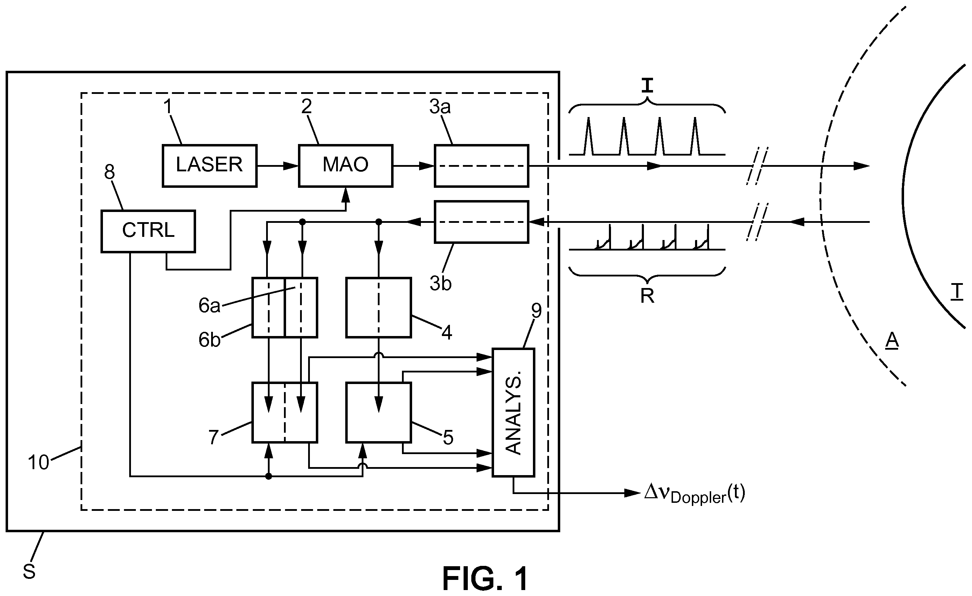

En référence à [Fig. 1], un dispositif LIDAR 10 est installé à bord d'un satellite S qui est en orbite autour de la Terre T. Le dispositif LIDAR 10 est utilisé pour obtenir des profils de vitesse aéraulique relatifs à des déplacements d'air qui existent dans l'atmosphère A de la Terre T. Pour cela, une ligne de visée du dispositif LIDAR 10 est dirigée vers l'atmosphère terrestre A, et des impulsions successives de rayonnement I sont émises à une fréquence de répétition déterminée, par exemple de l'ordre de 50,5 Hz (hertz). La durée individuelle de chaque impulsion I peut être de l'ordre de 20 ns (nanoseconde), encore à titre d'exemple. Chaque impulsion I pénètre dans l'atmosphère terrestre A selon la ligne de visée du dispositif LIDAR 10, et est partiellement rétrodiffusée par des éléments qui sont contenus dans l'atmosphère A à chaque endroit le long de cette ligne de visée. Des parties de chaque impulsion I sont ainsi progressivement rétrodiffusées en direction du dispositif LIDAR 10, et parviennent à ce dernier avec un retard temporel qui dépend de l'endroit dans l'atmosphère terrestre A où s'est produit la rétrodiffusion. De façon connue, le rayonnement qui est ainsi rétrodiffusé présente un décalage fréquentiel d'effet Doppler qui correspond à la composante de vitesse du déplacement de l'atmosphère A à l'endroit de la rétrodiffusion, cette composante étant parallèle à la ligne de visée du dispositif LIDAR 10. Il présente aussi une intensité qui dépend du phénomène physique dont résulte la rétrodiffusion, et d'une concentration locale des éléments qui produisent cette rétrodiffusion.

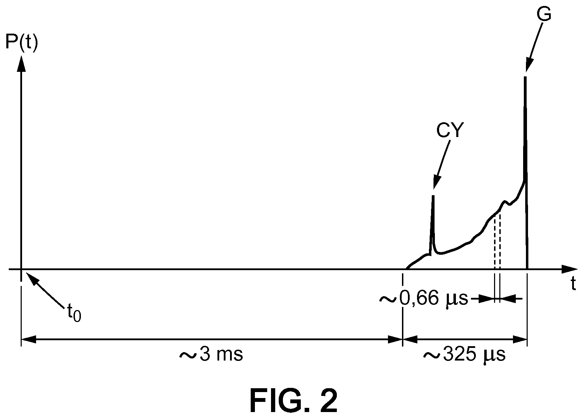

De façon connue, deux phénomènes physiques produisent de la rétrodiffusion pour les impulsions I dans l'atmosphère terrestre A. Le premier est la diffusion de Mie, qui est produite par des particules en suspension dans l'atmosphère terrestre A, telles que des aérosols, des grains de poussière ou de glace, etc. Le second est la diffusion de Rayleigh, qui est produite par des molécules de la composition atmosphérique. Pour cela, la longueur d'onde des impulsions I est sélectionnée à l'intérieur d'une bande d'efficacité de diffusion des particules et des molécules de l'atmosphère terrestre A. Par exemple, cette longueur d'onde peut être de l'ordre de 354,8 nm (nanomètre). A cause du mouvement brownien qui affecte les molécules, le rayonnement qui est rétrodiffusé selon le principe de Rayleigh constitue une raie spectrale qui est large, tout en ayant une position en termes de longueur d'onde ou de fréquence optique qui est déterminée par le décalage Doppler. Par comparaison, le rayonnement qui est rétrodiffusé selon le principe de Mie constitue une raie spectrale qui est fine, et dont la position est déterminée de même par le décalage Doppler. Du fait de la raréfaction des aérosols et des particules solides à haute altitude dans l'atmosphère terrestre A, la diffusion de Mie est prépondérante à basse altitude et la diffusion de Rayleigh est prépondérante à haute altitude. Dans la partie rétrodiffusée de chaque impulsion I qui revient au dispositif LIDAR 10 en provenant de l'atmosphère terrestre A, le rayonnement qui est collecté en début d'écho résulte donc principalement de la diffusion de Rayleigh, et le rayonnement de fin d'écho résulte principalement de la diffusion de Mie. En outre, l'écho est terminé par une réflexion d'une partie de l'impulsion I sur le sol de la Terre T. A cause de la durée de propagation du rayonnement le long de la ligne de visée du dispositif LIDAR 10, une durée de 0,66 µs (microseconde) à l'intérieur du signal de rétrodiffusion qui est collecté pour chaque impulsion I correspond à un intervalle de longueur dans l'atmosphère terrestre A, le long de la ligne de visée du dispositif LIDAR 10, de 100 m (mètre). Le diagramme de [Fig. 2] montre l'intensité du rayonnement rétrodiffusé, aussi appelé signal de rétrodiffusion, qui est collecté par le système LIDAR 10 à la suite d'une impulsion I émise et identifiée. L'axe horizontal repère des valeurs de retard t décompté à partir de l'instant t₀ d'émission de l'impulsion I, et l'axe vertical repère des valeurs d'intensité instantanée P(t). La durée d'environ 3 ms (milliseconde) correspond à la propagation aller-et-retour de l'impulsion I entre le satellite S et les couches supérieures de l'atmosphère terrestre A, G désigne le pic final d'intensité qui est dû à la réflexion sur la surface de la Terre T, et CY désigne à titre d'exemple un pic d'intensité intermédiaire qui est dû à la présence de nuages de type cirrus. Pour chaque impulsion I, la durée effective totale de collecte du rayonnement rétrodiffusé peut valoir jusqu'à plusieurs centaines de microsecondes, dépendant de l'inclinaison de la ligne de visée par rapport à la direction du nadir. Par exemple, pour une épaisseur d'atmosphère à observer de 40 km (kilomètre), et avec un angle d'inclinaison de 35° (degré) pour la ligne de visée, la durée effective totale de collecte du rayonnement rétrodiffusé est 2 · 40/(3·10⁸·cos(35°)) = 325 µs.

De retour à [Fig. 1], le dispositif LIDAR 10 comprend, pour le mode de réalisation de l'invention qui est décrit ici :
- une source laser 1, par exemple de type Nd:YAG à émission continue,
- un système 2 de découpage du rayonnement qui est produit par la source laser 1, en impulsions successives I,
- une optique d'émission 3a,
- une optique de réception 3b, qui est dédiée à collecter une partie rétrodiffusée du rayonnement de chaque impulsion I,
- un premier canal de détection, qui est constitué par un premier interféromètre 4 et un premier capteur optique 5, ce dernier étant conforme à l'invention,
- un second canal de détection, qui est constitué par deux seconds interféromètres 6a, 6b et un second capteur optique 7, lui aussi conforme à l'invention, et
- un module de pilotage 8, appelé contrôleur et noté CTRL.

La source laser 1, le système de découpage en impulsions 2, et éventuellement d'autres composants non représentés tels qu'un tripleur de fréquence optique et au moins un amplificateur optique, sont avantageusement réalisés par des technologies de fibres optiques et/ou de circuits optiques intégrés. Le tripleur de fréquence optique convertit la longueur d'onde de 1064 nm de la source laser Nd:YAG, du domaine infrarouge, en longueur d'onde d'environ 354,8 nm, dans le domaine ultraviolet, qui est plus favorable pour la diffusion de Rayleigh.

Le système de découpage en impulsions 2 peut être réalisé à partir d'un modulateur acousto-optique, noté MAO.

L'optique d'émission 3a et l'optique de réception 3b peuvent chacune être du type télescope. Le dispositif LIDAR 10 possède une configuration bistatique lorsque ces optiques d'émission 3a et de réception 3b sont distinctes. Toutefois, les deux optiques 3a et 3b peuvent être constituées alternativement par une même optique qui est commune aux deux fonctions d'émission des impulsions I et de collecte du rayonnement rétrodiffusé, noté R. Le dispositif LIDAR 10 possède alors une configuration monostatique.

Les deux canaux de détection sont de type à détection directe.

Dans le premier canal, qui est dédié à la rétrodiffusion de Mie, l'interféromètre 4 peut être un interféromètre de Fizeau, supposé connu de l'Homme du métier. Un tel interféromètre de Fizeau produit en sortie, à partir d'une partie du rayonnement rétrodiffusé R qui a été collectée par l'optique de réception 3b, une figure d'interférence dans laquelle une frange apparaît avec un décalage latéral qui correspond au décalage Doppler. Comme décrit plus loin, le capteur optique 5 est orienté pour que les colonnes de sa matrice de photodétecteurs soient parallèles à la direction longitudinale de la frange. Le capteur optique 5 permet alors de mesurer le décalage latéral de la frange d'interférence, pour chaque exposition de ce capteur optique 5 à du signal de rétrodiffusion. Ce premier canal, qui est dédié à la rétrodiffusion de Mie, fournit des premières informations sur le profil de vitesse aéraulique le long de la trace des impulsions I dans l'atmosphère terrestre A.

A cause de la largeur de raie importante pour la rétrodiffusion de Rayleigh, le second canal utilise un mode de détection directe qui est différent de celui du premier canal. Cet autre mode de détection directe est appelé écartométrie. Deux autres parties du rayonnement rétrodiffusé R qui ont été collectées par l'optique de réception 3b sont transmises en parallèle à travers les deux interféromètres 6a et 6b, qui sont chacun du type Fabry-Pérot, aussi supposé connu de l'Homme du métier. Ces deux interféromètres de Fabry-Pérot 6a et 6b sont juxtaposés de façon à produire deux taches lumineuses d'interférences, une par chaque interféromètre 6a, 6b, dans deux zones séparées de la surface photosensible du capteur optique 7. En outre, les épaisseurs optiques respectives des interféromètres de Fabry-Pérot 6a et 6b sont sélectionnées pour produire des résonances de transmission pour deux valeurs de longueur d'onde qui sont situées sur le bord inférieur et sur le bord supérieur, respectivement, de la raie spectrale large qui résulte de la rétrodiffusion de Rayleigh. L'effet Doppler qui affecte cette raie large de rétrodiffusion de Rayleigh la décale spectralement, ce qui augmente l'intensité totale de l'une des deux taches lumineuses et réduit l'intensité totale de l'autre tache lumineuse. Le capteur optique 7 permet de mesurer simultanément les intensités totales respectives des deux taches lumineuses, pour chaque exposition de ce capteur optique 7 à du signal de rétrodiffusion. Ce second canal, qui est dédié à la rétrodiffusion de Rayleigh, fournit des secondes informations qui concernent aussi le profil de vitesse aéraulique le long de la trace des impulsions I dans l'atmosphère terrestre A, indépendamment des premières informations fournies par le premier canal dédié à la rétrodiffusion de Mie. Par principe, les valeurs de décalage spectral d'effet Doppler sont cohérentes entre les deux canaux. Le second canal, dédié à la rétrodiffusion de Rayleigh, peut aussi fournir une évaluation de la densité ou concentration des particules le long de la trace des impulsions I dans l'atmosphère terrestre A.

Bien que l'ensemble des deux interféromètres 6a et 6b, qui sont disposés en parallèle l'un avec l'autre, soit représenté comme étant en parallèle avec l'interféromètre 4 dans [Fig. 1], il peut avantageusement être assemblé optiquement en série avec ce dernier, puisque les résonances de transmission respectives des interféromètres 4, 6a et 6b ont été sélectionnées pour être décalées spectralement.

Comme cela apparaîtra plus loin, les deux capteurs optiques 5 et 7 peuvent être d'un même modèle, grâce à l'invention. Autrement dit, ils peuvent être identiques.

Enfin, le contrôleur 8 pilote le système de découpage en impulsions 2 et chacun des capteurs optiques 5 et 7 selon des fonctionnements qui sont synchronisés. Plus précisément, le contrôleur 8 déclenche une séquence d'acquisitions successives par chacun des capteurs optiques 5 et 7 pour chaque impulsion I qui est émise. Toutefois, cette séquence d'acquisitions peut être effectuée à une fréquence de réalisation des acquisitions qui est différente entre les deux capteurs optiques 5 et 7. A titre d'exemple, une valeur possible de fréquence de réalisation des acquisitions peut être d'environ 1,5 MHz (mégahertz), correspondant à un découpage du chemin de propagation des impulsions I dans l'atmosphère terrestre A par intervalles successifs de 113 m. De préférence, les deux séquences d'acquisitions, par l'un et l'autre des deux capteurs optiques 5 et 7 sous pilotage par le contrôleur 8, peuvent être restreintes à la durée effective de collecte de rayonnement qui a été rétrodiffusé dans l'atmosphère terrestre A. Autrement dit, chaque séquence d'acquisitions peut avantageusement ne commencer qu'après la durée (3 ms à titre d'exemple dans [Fig. 2]) qui correspond à l'aller-et-retour du rayonnement entre le satellite S et la limite extérieure de l'atmosphère terrestre A.

L'invention est décrite dans la suite pour une réalisation de type CCD des deux capteurs optiques 5 et 7, mais il est entendu que cette description pourra être transposée par l'Homme du métier à une réalisation de type CMOS de ces capteurs optiques, sans nécessiter d'activité inventive. Il est suffisant d'indiquer pour cela que les regroupements de charges de photodétection qui sont décrits dans le cas CCD seront remplacés dans le cas CMOS par des sommations de tensions électriques qui correspondent aux charges de photodétection. Ces sommations de tensions électriques peuvent être effectuées de façon analogique, mais préférentiellement numériquement après numérisation des tensions qui sont lues individuellement pour chaque photodétecteur.

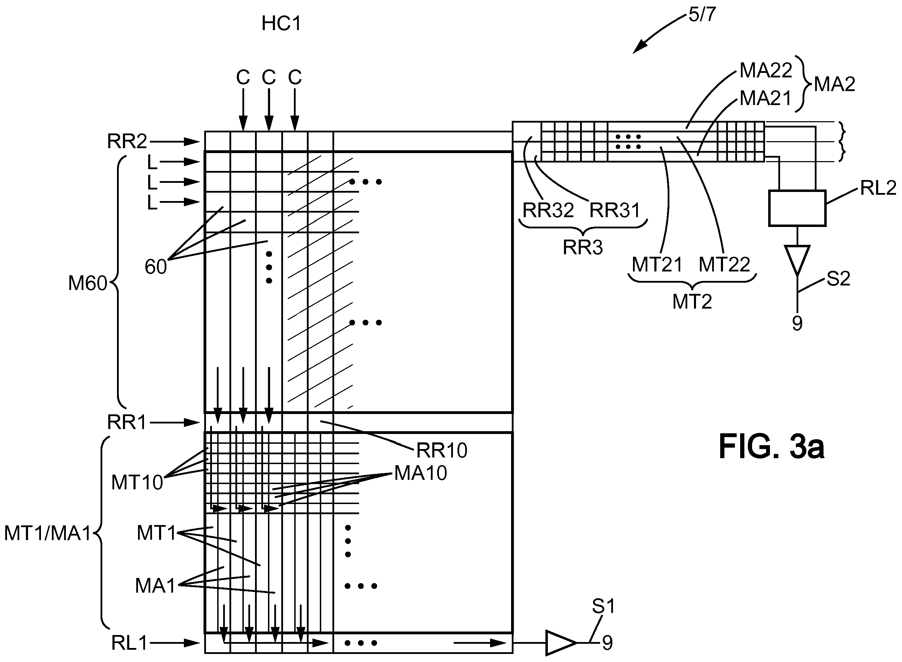

Considérant maintenant et jusqu'à la fin de la présente description que les capteurs optiques 5 et 7 sont identiques et de type CCD, chacun de ces capteurs optiques comprend, comme représenté dans [Fig. 3a] :
- une matrice M60 de photodétecteurs 60 qui sont disposés aux intersections de colonnes C et de lignes L. La matrice M60 peut être de dimension 32 x 32 photodétecteurs 60, avec un pas des photodétecteurs dans chaque ligne L et dans chaque colonne C qui peut être sensiblement égal à 30 µm (micromètre) à titre d'exemple ;
- un premier registre de regroupement RR1, qui est relié à la matrice M60 des photodétecteurs 60 pour regrouper les charges de photodétection séparément par colonnes C de photodétecteurs, pour chaque exposition ;
- une première matrice de transfert MT1, qui est reliée au premier registre de regroupement RR1 pour stocker transitoirement des charges de photodétection regroupées dans ce registre de regroupement RR1 qui ont été générées pendant des expositions successives de la matrice M60 des photodétecteurs 60, séparément pour chacune de ces expositions ;
- une première matrice d'accumulation MA1, reliée à la première matrice de transfert MT1 et de même taille que cette dernière, et adaptée pour accumuler les charges de photodétection regroupées pour des répétitions successives d'une séquence formée par les expositions successives de la matrice M60 des photodétecteurs 60 ; et
- un premier registre de lecture RL1, qui est relié à des sorties de colonnes de la première matrice d'accumulation MA1.

Lorsque ce capteur optique est utilisé dans le canal dédié à la rétrodiffusion de Mie, conformément à la référence 5 dans [Fig. 1], il permet de détecter la position de la frange d'interférence qui est produite par l'interféromètre 4. Pour cela, le capteur optique 5 est orienté par rapport à l'interféromètre 4 pour que la frange soit parallèle à la direction des colonnes C. Pour chaque impulsion I qui est émise, le contrôleur 8 déclenche une séquence d'expositions successives de la matrice M60 des photodétecteurs 60, par exemple avec une exposition toutes les 6 µs pendant la durée de collecte du rayonnement rétrodiffusé R. Chaque exposition est suivie par un regroupement des charges de photodétection par colonnes, dans une cellule RR10 du registre de regroupement RR1 qui est dédiée séparément à chaque colonne C de la matrice de photodétecteurs M60. Ces regroupements de charges de photodétection sont effectués simultanément pour toutes les colonnes C, puis les charges de photodétection ainsi regroupées sont transférées dans des cellules MT10 de la matrice de transfert MT1, séparément pour les accumulations successives de chaque séquence d'expositions qui est relative à une même impulsion I qui a été émise par le dispositif LIDAR 10. A la fin de la séquence d'expositions relatives à une même impulsion I, le contenu de chaque cellule MT10 est transféré à une cellule MA10 correspondante de la matrice d'accumulation MA1, sans réinitialisation intermédiaire de cette dernière. La matrice d'accumulation MA1 réalise ainsi des accumulations sur plusieurs impulsions I d'une série d'impulsions successives, afin d'obtenir des signaux de détection qui soient suffisants. A la fin de la série d'impulsions, le contenu de chaque cellule MA10 est lu à la sortie S1 du capteur optique par l'intermédiaire du registre de lecture RL1. Un tel fonctionnement génère un bruit de lecture minimal, car il ne comporte qu'une seule opération de lecture de ligne pour plusieurs impulsions successives, pour chaque instant d'échantillonnage du rayonnement rétrodiffusé R compté à partir de l'émission d'impulsion.

Plus précisément, le transfert des contenus successifs du registre de regroupement RR1 à la matrice d'accumulation MA1 est effectué pour chaque impulsion I de la série par l'intermédiaire de la matrice de transfert MT1. Des colonnes de la matrice de transfert MT1 sont dédiées une-à-une aux colonnes de la matrice de photodétecteurs M60, ainsi qu'à des colonnes de la matrice d'accumulation MA1, et les cellules MT10 de la matrice de transfert MT1 sont dédiées une-à-une aux cellules MA10 de la matrice d'accumulation MA1. Les charges regroupées d'une première exposition d'une séquence qui correspond à une impulsion émise I, sont transférées du registre de regroupement RR1 aux cellules MT10 de la ligne de la matrice de transfert MT1 qui est la plus éloignée du registre de regroupement RR1. Puis, les charges regroupées d'une deuxième exposition de la même séquence correspondant à la même impulsion émise I, sont transférées du registre de regroupement RR1 aux cellules MT10 de la ligne précédente de la matrice de transfert MT1 en se rapprochant du registre de regroupement RR1, etc. La matrice de transfert MT1 contient ainsi un échantillonnage des positions variables de la frange qui caractérise le décalage Doppler par la rétrodiffusion de Mie, au cours de la réception du rayonnement rétrodiffusé R pour une seule impulsion I. La longueur des colonnes des matrices de transfert MT1 et d'accumulation MA1 détermine le nombre de valeurs dans cet échantillonnage. Par exemple, les matrices de transfert MT1 et d'accumulation MA1 peuvent contenir 66 cellules MT10 ou MA10, respectivement, par colonne. Après la fin de la série d'expositions relative à une même impulsion I, le contenu de charges de photodétection de chaque colonne de la matrice de transfert MT1 est transféré à la colonne correspondante de la matrice d'accumulation MA1, de chaque cellule MT10 à la cellule MA10 correspondante mais simultanément pour toutes les cellules, pour réaliser l'accumulation sur toutes les impulsions I successives d'une même série, attribuées à une même trace de ces impulsions I dans l'atmosphère terrestre A. Dans [Fig. 3a], la zone qui est hachurée à l'intérieur de la matrice de photodétecteurs M60 montre une position instantanée qui est possible pour la frange d'interférence qui résulte de la rétrodiffusion de Mie, et les flèches indiquées symbolisent le fonctionnement qui vient d'être décrit pour le canal de détection dédié à cette rétrodiffusion de Mie.

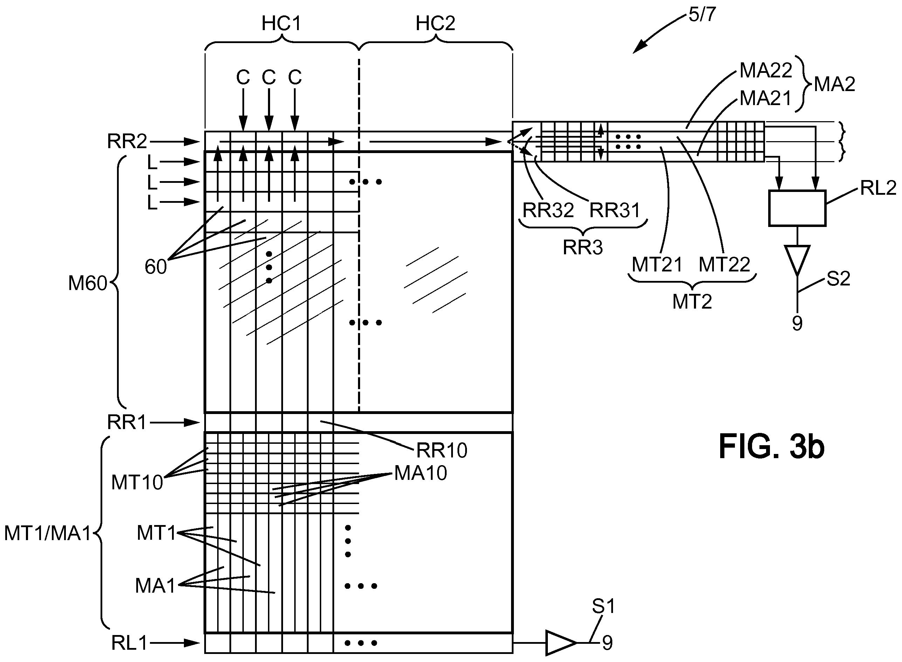

Selon l'invention, ce même modèle de capteur optique est utilisé dans le canal dédié à la rétrodiffusion de Rayleigh, conformément à la référence 7 dans [Fig. 1], afin de détecter les intensités respectives des deux taches lumineuses qui sont produites par les interféromètres 6a et 6b. Pour cela, les colonnes C de la matrice M60 des photodétecteurs 60 sont séparées en deux sous-ensembles notés HC1 et HC2 dans [Fig. 3b]. Les deux sous-ensembles HC1 et HC2, qui correspondent aux zones d'intérêt de la partie générale de la présente description, peuvent comporter des nombres identiques de colonnes voisines C. Le capteur optique comprend les éléments additionnels suivants, en plus des éléments RR1, MT1, MA1, RL1 et S1 qui ont été décrits plus haut :
- un deuxième registre de regroupement RR2, qui est relié à la matrice M60 des photodétecteurs 60 pour regrouper les charges de photodétection séparément par colonnes de photodétecteurs, pour chaque exposition ;
- un troisième registre de regroupement RR3, adapté pour regrouper dans deux de ses cellules, appelées macro-pixels et notées RR31 et RR32, les charges de photodétection transmises par le deuxième registre de regroupement RR2, conformément aux deux sous-ensembles séparés HC1 et HC2 des colonnes C de la matrice de photodétecteurs M60. Autrement dit, le macro-pixel RR31 est dédié au sous-ensemble de colonnes HC1, et le macro-pixel RR32 est dédié séparément au sous-ensemble de colonnes HC2 ;
- une seconde matrice de transfert MT2, qui est reliée au troisième registre de regroupement RR3 et adaptée pour stocker transitoirement des contenus des macro-pixels RR31 et RR32 qui ont été générés pendant des expositions successives de la matrice de photodétecteurs M60, séparément pour les deux macro-pixels ;
- une seconde matrice d'accumulation MA2, qui est reliée à la seconde matrice de transfert MT2 et de même taille que cette dernière, et adaptée pour accumuler les contenus des macro-pixels RR31 et RR32 pour des répétitions successives d'une séquence formée par les expositions successives de la matrice des photodétecteurs ; et
- un second registre de lecture RL2, qui est relié à des sorties de la seconde matrice d'accumulation MA2.

Pour regrouper les charges de photodétection par colonnes de la matrice de photodétecteurs M60, les premier et second registres de regroupement RR1 et RR2 peuvent avantageusement être reliés à des extrémités respectives opposées des colonnes C de la matrice de photodétecteurs M60.

La seconde matrice de transfert MT2 est constituée par deux registres de mêmes longueurs, notés MT21 et MT22 et dits registres de transfert, qui sont destinés à être utilisés en parallèle.

La seconde matrice d'accumulation MA2 est aussi constituée par deux registres de mêmes longueurs, notés MA21 et MA22 et dits registres d'accumulation, et qui sont destinés à être utilisés en parallèle. Les registres MT21, MT22, MA21 et MA22 ont tous les quatre une même longueur commune, correspondant au nombre d'échantillons acquis pendant la collecte de rayonnement rétrodiffusé R qui est effectuée pour chacune des impulsions I. A titre d'exemple, cette longueur commune peut encore être de 66 cellules, mais il n'y a pas de nécessité qu'elle soit égale à la longueur de colonnes des matrices de transfert MT1 et d'accumulation MA1. En outre, les quatre registres MT21, MT22, MA21 et MA22 peuvent être agencés géométriquement de façon quelconque au sein du circuit intégré qui constitue le capteur optique, sans nécessairement être adjacents ni parallèles entre eux.

Lorsqu'il est utilisé dans le canal dédié à la rétrodiffusion de Rayleigh conformément à la référence 7 dans [Fig. 1], ce capteur optique permet de détecter les intensités respectives des deux taches lumineuses qui sont produites dans les sous-ensembles de colonnes HC1 et HC2 de la façon qui est décrite maintenant. A chaque exposition de la matrice de photodétecteurs M60, les charges de photodétection qui sont générées pendant cette exposition sont regroupées séparément par colonne C dans le registre de regroupement RR2. Pour cela, le registre de regroupement RR2 comporte autant de cellules séparées que le nombre des colonnes C dans la matrice de photodétecteurs M60. Aussi pour chaque exposition de la matrice de photodétecteurs M60, ces charges de photodétection déjà regroupées dans le deuxième registre de regroupement RR2, sont à nouveau regroupées dans les macro-pixels RR31 et RR32 : RR31 pour les charges de photodétection provenant des colonnes C du sous-ensemble HC1, et RR32 pour les charges de photodétection provenant des colonnes C du sous-ensemble HC2. Pour cela et pour la disposition qui est représentée dans [Fig. 3b], le contrôleur 8 oriente d'abord vers le macro-pixels RR32 les charges de photodétection contenues dans une seconde moitié de la longueur du deuxième registre de regroupement RR2, correspondant au sous-ensemble de colonnes HC2, puis vers le macro-pixels RR31 les charges de photodétection contenues dans une première moitié de la longueur du deuxième registre de regroupement RR2, correspondant au sous-ensemble de colonnes HC1.

Pour chaque impulsion I, les contenus du macro-pixel RR31 qui résultent d'expositions successives de la matrice de photodétecteurs M60, sont transférés dans les cellules du registre de transfert MT21, en commençant par les cellules de ce registre MT21 qui sont les plus éloignées du macro-pixel RR31. Une accumulation sur des impulsions I successives est alors réalisée en utilisant le registre d'accumulation MA21, selon le même principe de fonctionnement que celui qui a été décrit plus haut pour chaque colonne des matrices de transfert MT1 et d'accumulation MA1. De la même façon, les contenus du macro-pixel RR32 qui résultent des mêmes expositions successives de la matrice de photodétecteurs M60, sont transférés dans les cellules du registre de transfert MT22, en commençant par les cellules de ce registre MT22 qui sont les plus éloignées du macro-pixel RR32. Une autre accumulation sur les mêmes impulsions I successives est alors réalisée en utilisant le registre d'accumulation MA22. Enfin, les contenus accumulés des registres MA21 et MA22 sont transférés alternativement à la sortie S2 du capteur optique, par l'intermédiaire du registre de lecture RL2. Pour ce fonctionnement relatif au canal dédié à la rétrodiffusion de Rayleigh, le registre de lecture RL2 transmet à la fin de chaque série d'impulsions I relatives une même trace dans l'atmosphère terrestre A, une première tension électrique représentative de l'intensité de la tache qui correspond à l'un des bords spectraux de la raie large de rétrodiffusion de Rayleigh, et une seconde tension électrique représentative de l'intensité de l'autre tache qui correspond à l'autre bord spectral de la même raie large de rétrodiffusion de Rayleigh. La valeur du décalage spectral d'effet Doppler peut alors être déduite pour la rétrodiffusion de Rayleigh, du résultat d'une différence relative qui est calculée entre ces deux tensions électriques représentatives. Grâce à la mise en œuvre qui vient d'être décrite pour les deux registres de regroupement RR2 et RR3, et pour les matrices de transfert MT2 et d'accumulation MA2, chaque mesure du décalage spectral d'effet Doppler est affectée par un bruit de lecture qui est minimal, puisqu'il résulte d'une seule opération de lecture effectuée pour chacune des deux taches lumineuses, pour chaque série d'impulsions. Dans [Fig. 3b], les zones qui sont hachurées à l'intérieur de la matrice de photodétecteurs M60 montrent des extensions possibles des deux taches lumineuses qui résultent de la rétrodiffusion de Rayleigh, et les flèches indiquées symbolisent le fonctionnement qui vient d'être décrit pour le canal de détection dédié à cette rétrodiffusion de Rayleigh.

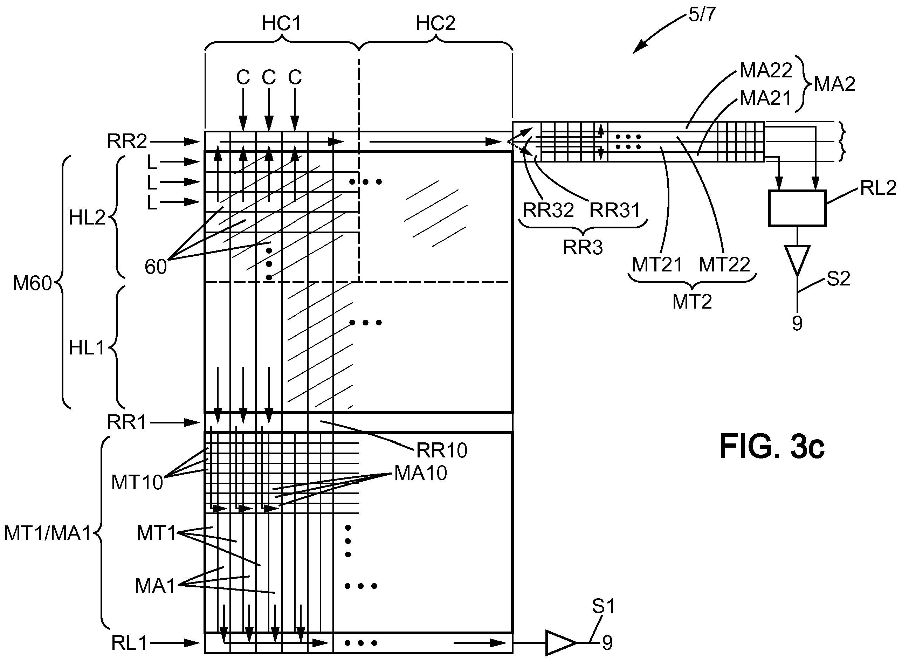

[Fig. 3c] montre une autre utilisation du même modèle de capteur optique que précédemment, encore pour l'application de [Fig. 1], pour laquelle une unité unique de capteur optique est utilisée à la fois pour le canal de détection qui est dédié à la rétrodiffusion de Mie et pour le canal qui est dédié à la rétrodiffusion de Rayleigh. Pour cela, les interféromètres 4, 6a et 6b sont disposés de sorte qu'une première partie HL1 de la matrice de photodétecteurs M60 qui est contigüe du premier registre de regroupement RR1 contienne la frange d'interférence qui est produite par l'interféromètre 4. Cette première partie HL1 de la matrice des photodétecteurs M60 peut être constituée par des segments respectifs des colonnes C qui aboutissent au premier registre de regroupement RR1. En plus, la disposition des interféromètres 4, 6a et 6b est telle qu'une seconde partie HL2 de la matrice des photodétecteurs M60, qui est complémentaire de la première partie HL1 et contigüe du deuxième registre de regroupement RR2, contienne les deux taches d'interférences qui sont produites par les interféromètres 6a et 6b. Plus précisément, ces deux taches d'interférences sont contenues dans deux moitiés de la seconde partie HL2 de la matrice de photodétecteurs M60, encore notées HC1 et HC2 mais limitées cette fois à l'intérieur de la seconde partie HL2 la matrice de photodétecteurs M60. Ces deux moitiés HC1 et HC2 de la seconde partie HL2 de la matrice de photodétecteurs M60 correspondent aux zones d'intérêt de la partie générale de la présente description. Dans [Fig. 3c], les zones qui sont hachurées à l'intérieur de la matrice de photodétecteurs M60 montrent une position instantanée possible pour la frange d'interférence qui résulte de la rétrodiffusion de Mie, contenue dans la partie de matrice HL1, et des extensions instantanées possibles pour les deux taches d'interférences qui résultent de la rétrodiffusion de Rayleigh, contenues dans les zones d'intérêt HC1 et HC2 à l'intérieur de la partie de matrice HL2. Il n'est pas nécessaire que les nombres des lignes L respectifs des parties de matrice HL1 et HL2 soient égaux, mais ils peuvent être adaptés aux extensions maximales qui sont attendues pour les taches d'interférences du canal dédié à la diffusion de Rayleigh. Le fonctionnement du capteur optique pour cette utilisation combinée est une combinaison du fonctionnement qui a été décrit en référence à [Fig. 3a], mais en le restreignant aux segments des colonnes C qui sont limités dans la première partie HL1 de la matrice de photodétecteurs M60, avec l'autre fonctionnement qui a été décrit en référence à [Fig. 3b], mais en restreignant ce dernier aux segments des colonnes C qui sont limités à la seconde partie HL2 de la matrice de photodétecteurs M60. Ces deux fonctionnements combinés sont exécutés simultanément pour chaque impulsion I, tels qu'indiqués par les flèches correspondantes dans [Fig. 3c], et en étant commandés par le contrôleur 8.

La sortie S1 du capteur optique 5 et la sortie S2 du capteur optique 7, ou bien les deux sorties S1 et S2 du même capteur optique dans le cas de [Fig. 3c], sont connectées à des entrées dédiées d'un module d'analyse 9, qui est noté ANALYS. dans [Fig. 1]. Le module d'analyse 9 est configuré pour déduire une première valeur du décalage spectral d'effet Doppler Δv_{Doppler} des premières informations de détection reçues de la sortie S1, et pour déduire indépendamment une seconde valeur du décalage Doppler Δv_{Doppler} des secondes informations de détection reçues de la sortie S2. Ces deux valeurs du décalage Doppler Δv_{Doppler} sont en principe égales pour chaque valeur d'altitude dans l'atmosphère terrestre A, mais chaque canal est plus précis que l'autre pour un intervalle différent de valeurs d'altitude. Une telle configuration du module d'analyse 9 pour des dispositifs LIDAR à détection directe est très connue de l'Homme du métier. Elle utilise les caractéristiques de chaque interféromètre 4, 6a, 6b pour convertir les positions de franges et les intensités de taches d'interférences en valeurs de décalage spectral d'effet Doppler Δv_{Doppler}. Elle utilise en outre la formule suivante pour convertir chaque valeur de décalage spectral d'effet Doppler Δv_{Doppler} en valeur de vitesse aéraulique : V = 0,5·C·Δv_{Doppler}/v_{I}, où V est la vitesse aéraulique parallèle à la direction de visée du dispositif LIDAR 10 et orientée vers ce dispositif LIDAR, C est la vitesse de la lumière dans le vide et v_{I} est la fréquence optique des impulsions I.

Les perfectionnements suivants peuvent être mis en œuvre pour certaines au moins des utilisations du capteur optique qui viennent d'être décrites :
- les regroupements de charges de photodétection qui sont effectués, qui sont accumulés puis qui sont convertis en tensions électriques représentatives, peuvent être limités à un sous-ensemble des colonnes C de photodétecteurs 60, lorsque la frange ou les deux taches d'interférences sont réputées contenues dans ce sous-ensemble de colonnes ;
- les regroupements de charges de photodétection qui sont effectués, qui sont accumulés puis qui sont convertis en tensions électriques représentatives, peuvent être limités à des segments restreints des colonnes C, lorsque la frange ou les deux taches d'interférences sont réputées contenues dans la réunion de ces segments restreints de colonnes ;
- une colonne C qui est réputée contenir au moins un photodétecteur 60 qui est défectueux, peut être supprimée des regroupements de charges de photodétection qui sont effectués, accumulés puis convertis en tensions électriques représentatives ;
- lorsqu'un ou plusieurs photodétecteur(s) 60 est (sont) réputé(s) être défectueux, il(s) peut (peuvent) être inhibé(s) lors de chaque exposition de façon à être exclu(s) de la (des) portion(s) de la matrice M60 qui est (sont) effective(s) pour chaque mesure de profil aéraulique. La portion de la matrice M60 qui est effective pour la mesure de profil aéraulique peut posséder alors une limite qui est non-convexe ;
- une utilisation du capteur optique pour laquelle les charges de photodétection qui sont utiles pour une mesure de profil aéraulique sont transférées à l'un des deux registres de regroupement RR1 ou RR2 par circulation dans un sens le long des colonnes C, à l'intérieur de la matrice de photodétecteurs M60, peut être complétée par des expositions de calibration ou de mesure de lignes de base pour lesquelles les charges de photodétection sont évacuées par circulation dans le sens opposé le long des colonnes C ;
- lorsque la détection du rayonnement rétroréfléchi R, réalisée conformément à l'un des fonctionnements illustrés par [Fig. 3a]-[Fig. 3c], est limitée à l'une de deux polarisations orthogonales, les deux canaux dédiés à la rétrodiffusion de Mie et à la rétrodiffusion de Rayleigh peuvent être dupliqués pour l'autre de ces deux polarisations orthogonales. Les polarisations considérées peuvent être des polarisations linéaires qui sont perpendiculaires l'une à l'autre, ou des polarisations circulaires qui ont des sens de rotation opposés ; et
- le module d'analyse 9 peut être configuré en outre pour déduire une valeur de concentration des molécules diffusantes qui sont effectives pour la rétrodiffusion de Rayleigh, à partir d'une somme des intensités respectives des deux taches d'interférences. Par exemple, la valeur de concentration des molécules peut être obtenue par lecture dans une table de valeurs préenregistrée, qui associe chaque valeur de somme des intensités des taches d'interférences à une valeur de concentration des molécules.

Il est entendu que l'invention peut être reproduite en modifiant des aspects secondaires des modes de réalisation qui ont été décrits en détail ci-dessus, tout en conservant certains au moins des avantages cités. Notamment, les registres de transfert MT21 et MT22 peuvent avoir des dispositions géométriques quelconques dans le circuit intégré du capteur optique, en étant parallèles un-à-un aux registres d'accumulation MA21 et MA22. En outre, toutes les valeurs numériques qui ont été citées ne l'ont été qu'à titre d'illustration, et peuvent être changées.

## Revendications

1. Dispositif LIDAR (10) comprenant :
- une source laser (1),
- un système (2) de découpage du rayonnement qui est produit par la source laser (1), en impulsions successives,
- une optique d'émission (3a),
- une optique de réception (3b), qui est dédiée à collecter une partie rétrodiffusée du rayonnement de chaque impulsion,
- un premier canal de détection, qui est constitué par un premier interféromètre (4) et un premier capteur optique (5),
- un second canal de détection, qui est constitué par deux seconds interféromètres (6a, 6b) et un second capteur optique (7), et
- un module de pilotage (8),
**où** les premier et second capteurs optiques (5, 7) sont identiques et comprennent chacun une matrice (M60) de photodétecteurs (60) adaptée pour une acquisition d'images successives, chaque image acquise étant constituée de plusieurs lignes (L) et de plusieurs colonnes (C), chaque photodétecteur générant, à chaque exposition à un rayonnement, des charges de photodétection représentatives d'un nombre de photons qui sont reçus par le photodétecteur pendant l'exposition, le capteur optique étant configuré pour transformer les charges de photodétection en tensions représentatives,
chacun des premier et second capteurs optiques (5, 7) comprenant en outre :
- d'une part un module de détection d'au moins une colonne (C), en fonction de charges accumulées dans cette colonne et transformées en tension représentative, ladite colonne détectée étant représentative d'une localisation d'au moins une frange de rayonnement de position variable selon la diffusion de Mie, qui est formée sur ladite matrice (M60) des photodétecteurs (60) ; et
- d'autre part un module d'intégration adapté pour générer au moins deux tensions représentatives respectivement des charges de photodétection qui ont été générées respectivement par au moins deux zones d'intérêt bidimensionnelles disjointes (HC1, HC2) de la matrice (M60) des photodétecteurs (60), représentative d'une détection d'un décalage spectral d'une raie élargie de type Rayleigh, chaque zone d'intérêt correspondant à un sous-ensemble réduit au moins par rapport à l'ensemble des colonnes (C),
où le premier interféromètre produit en sortie, à partir d'une partie du rayonnement rétrodiffusé qui a été collectée par l'optique de réception, une figure d'interférence dans laquelle une frange apparaît avec un décalage latéral qui correspond au décalage Doppler, le premier capteur optique (5) étant orienté pour que les colonnes de sa matrice de photodétecteurs soient parallèles à la direction longitudinale de la frange,
et où le second capteur optique permet de mesurer simultanément les intensités totales respectives de deux taches lumineuses, pour chaque exposition du second capteur optique (7) à du signal de rétrodiffusion,
le module de pilotage (8) pilotant le système de découpage en impulsions (2) et chacun des premier et second capteurs optiques (5, 7) selon des fonctionnements qui sont synchronisés, en déclenchant une séquence d'acquisitions successives par chacun desdits premier et second capteurs optiques pour chaque impulsion (I) qui est émise.

2. Dispositif LIDAR (10) selon la revendication 1, dans lequel pour chacun des premier et second capteurs optiques, chaque exposition au rayonnement des photodétecteurs (60) est réalisée pendant au moins un intervalle de temps déterminé, ledit intervalle de temps étant mémorisé et réglé en fonction d'au moins une épaisseur déterminée d'atmosphère (A) à analyser.

3. Dispositif LIDAR (10) selon la revendication 1 ou 2, dans lequel pour chacun des premier et second capteurs optiques, les photodétecteurs (60) sont aptes à générer chacun leur tension représentative des charges de photodétection, le module d'intégration sommant sélectivement des tensions générées dans chaque zone d'intérêt (HC1, HC2), où chaque zone d'intérêt correspond à un sous-ensemble réduit également par rapport à l'ensemble des lignes (L),
ou dans lequel le module d'intégration réalise au moins deux sommations de charges générées respectivement par au moins deux zones étendues distinctes couvrant respectivement lesdites deux zones d'intérêt (HC1, HC2), préalablement à la génération desdites deux tensions.

4. Dispositif LIDAR (10) selon l'une des revendications 1 à 3, dans lequel pour chacun des premier et second capteurs optiques, les zones d'intérêt (HC1, HC2) sont des zones prédéterminées et invariables dans la matrice (M60).

5. Dispositif LIDAR (10) selon l'une des revendications 1 à 4, dans lequel pour chacun des premier et second capteurs optiques, chaque zone d'intérêt (HC1, HC2) forme un rectangle correspondant à toute ou partie d'une hauteur des colonnes (C) de leur sous-ensemble réduit de colonnes.

6. Dispositif LIDAR (10) selon l'une des revendications 1 à 4, dans lequel pour chacun des premier et second capteurs optiques, chaque zone d'intérêt (HC1, HC2) présente différentes hauteurs en correspondance avec les différentes colonnes (C) de l'image, et présente différentes largeurs en correspondance avec les différentes lignes (L) de l'image.

7. Dispositif LIDAR (10) selon l'une des revendications 1 à 6, dans lequel pour chacun des premier et second capteurs optiques, les zones d'intérêt (HC1, HC2) possèdent des formes respectives qui sont différentes.

8. Dispositif LIDAR (10) selon l'une des revendications 1 à 3, 4, 6 ou 7, dans lequel pour chacun des premier et second capteurs optiques, chaque zone d'intérêt (HC1, HC2) possède une forme non-convexe.

9. Dispositif LIDAR (10) selon l'une des revendications 1 à 5 et 7, où chacun des premier et second capteurs optiques est de type CCD et comprend :
- un premier registre de regroupement (RR1), relié à la matrice (M60) des photodétecteurs (60) et adapté pour regrouper les charges de photodétection par colonnes (C) de ladite matrice des photodétecteurs, pour chaque exposition ;
- une première matrice de transfert (MT1), reliée au premier registre de regroupement (RR1) et adaptée pour transférer des charges de photodétection regroupées qui ont été générées pendant des expositions successives de la matrice (M60) des photodétecteurs (60), séparément pour lesdites expositions ;
- une première matrice d'accumulation (MA1), reliée à la première matrice de transfert (MT1) et de même taille que ladite première matrice de transfert, et adaptée pour accumuler les charges de photodétection regroupées pour des répétitions successives d'une série formée par les expositions successives de la matrice (M60) des photodétecteurs (60) ;
- un premier registre de lecture (RL1), relié à des sorties de colonnes de la première matrice d'accumulation (MA1) ;
- un deuxième registre de regroupement (RR2), relié à la matrice (M60) des photodétecteurs (60) et adapté pour regrouper les charges de photodétection par colonnes (C) de ladite matrice des photodétecteurs, pour chaque exposition ;
- un troisième registre de regroupement (RR3), adapté pour regrouper dans deux cellules, appelées macro-pixels (RR31, RR32), les charges de photodétection transmises par le deuxième registre de regroupement (RR2) conformément à deux sous-ensembles séparés des colonnes (C) de la matrice (M60) des photodétecteurs (60) ;
- une seconde matrice de transfert (MT2), reliée au troisième registre de regroupement (RR3) et adaptée pour transférer des contenus des macro-pixels (RR31, RR32) qui ont été générés pendant des expositions successives de la matrice (M60) des photodétecteurs (60), séparément pour lesdits deux macro-pixels ;
- une seconde matrice d'accumulation (MA2), reliée à la seconde matrice de transfert (MT2) et de même taille que ladite seconde matrice de transfert, et adaptée pour accumuler les contenus des macro-pixels (RR31, RR32) pour des répétitions successives d'une série formée par les expositions successives de la matrice (M60) des photodétecteurs (60) ; et
- un second registre de lecture (RL2), relié à des sorties de colonnes de la seconde matrice d'accumulation (MA2).

10. Satellite (S) comprenant au moins un dispositif LIDAR (10) selon l'une des revendications précédentes, le dispositif LIDAR étant embarqué à bord du satellite.

11. Procédé d'acquisition de profils de vitesse aéraulique à partir d'un satellite (S) qui est en orbite autour de la Terre (T), le satellite étant selon la revendication précédente et le procédé comprenant les étapes suivantes :
- émettre des impulsions laser (I) successives en direction de la Terre (T) ;
- collecter une partie rétrodiffusée de chaque impulsion laser (I), appelée signal de rétrodiffusion (R) et ayant une intensité variable en fonction d'une durée écoulée à partir d'une émission de l'impulsion laser, la durée écoulée correspondant à une propagation de l'impulsion laser et du signal de rétrodiffusion entre le satellite (S) et une altitude de rétrodiffusion dans l'atmosphère terrestre (A) ;
- pour chaque signal de rétrodiffusion (R) qui est collecté, traiter ledit signal de rétrodiffusion d'une part pour que des premières informations spectrales, associées à une rétrodiffusion de Mie, apparaissent sous forme de positions variables d'une frange d'interférence formée par un premier interféromètre (4), qui sont relatives à plusieurs premières valeurs de la durée écoulée à partir de l'émission de chaque impulsion laser (I), et d'autre part pour que des secondes informations spectrales, associées à une rétrodiffusion de Rayleigh, apparaissent sous forme de deux taches d'interférences d'intensités respectives variables, qui sont relatives à plusieurs secondes valeurs de la durée écoulée à partir de l'émission de chaque impulsion laser ; et
- déduire un premier profil de vitesse aéraulique à partir des premières informations spectrales, et un second profil de vitesse aéraulique à partir des secondes informations spectrales.

12. Procédé selon la revendication 11, suivant lequel une densité de particules diffusantes est déterminée en outre à partir des intensités respectives des deux taches d'interférences.

13. Procédé selon la revendication 11 ou 12, suivant lequel les impulsions laser (I) qui sont émises possèdent une polarisation identifiée, et le procédé comprend en outre de déterminer d'une manière synchrone avec l'acquisition des canaux de Rayleigh et de Mie, un taux d'intensité de la partie rétrodiffusée de chaque impulsion laser qui existe pour une polarisation croisée, ladite polarisation croisée étant orthogonale à une polarisation de ladite partie rétrodiffusée de chaque impulsion laser qui correspond à la polarisation identifiée des impulsions laser émises.

14. Procédé selon l'une quelconque des revendications 11 à 13, suivant lequel des intervalles de temps associés respectivement aux expositions de la matrice (M60) des photodétecteurs (60) pour chaque impulsion laser (I) qui est émise, correspondent à des intervalles déterminés de valeurs d'altitude, le long d'un chemin de propagation des impulsions laser (I) dans l'atmosphère terrestre (A).

## Patentansprüche

1. LIDAR-Vorrichtung (10) aufweisend:
- eine Laserquelle (1),
- ein System (2) zum Zerhacken der von der Laserquelle (1) erzeugten Strahlung in aufeinanderfolgende Pulse,
- eine Emissionsoptik (3a),
- eine Empfangsoptik (3b), die vorgesehen ist, einen zurückgestreuten Teil der Strahlung jedes Pulses zu sammeln,
- einen ersten Detektionskanal, der aus einem ersten Interferometer (4) und einem ersten optischen Sensor (5) gebildet ist,
- einen zweiten Detektionskanal, der aus zwei zweiten Interferometern (6a, 6b) und einem zweiten optischen Sensor (7) gebildet ist, und
- ein Steuermodul (8),
wobei der erste und zweite optische Sensor (5, 7) gleich sind und jeweils eine Matrix (M60) von Fotodetektoren (60) aufweisen, die für eine Erfassung von aufeinanderfolgenden Bildern geeignet ist, wobei jedes erfasste Bild aus mehreren Zeilen (L) und mehreren Spalten (C) gebildet ist, jeder Fotodetektor bei jeder Belichtung mit Strahlung Fotodetektionsladungen erzeugt, die für eine Anzahl von Photonen, die von dem Fotodetektor während der Belichtung empfangen worden sind, repräsentativ sind, wobei der optische Sensor konfiguriert ist, die Fotodetektionsladungen in repräsentative Spannungen umzuwandeln,
wobei der erste und zweite optische Sensor (5, 7) ferner jeweils aufweisen:
- einerseits ein Detektionsmodul zum Detektieren mindestens einer Spalte (C) als Funktion von in dieser Spalte angehäuften und in repräsentative Spannung umgewandelten Ladungen, wobei die detektierte Spalte repräsentativ für eine Lokalisierung (Position) mindestens eines an der Matrix (M60) der Fotodetektoren (60) gebildeten Strahlungsstreifens ist, dessen Position gemäß der Mie-Streuung variabel ist; und
- andererseits ein Integrationsmodul, das geeignet ist, mindestens zwei Spannungen zu erzeugen, die jeweils für Fotodetektionsladungen repräsentativ sind, die jeweils von mindestens zwei zweidimensionalen getrennten Zonen von Interesse (HC1, HC2) der Matrix (M60) der Fotodetektoren (60) erzeugt worden sind, die repräsentativ ist für eine Detektion einer spektralen Verschiebung einer verbreiterten Linie des Typs Rayleigh, wobei jede Zone von Interesse einer bezüglich der Gesamtheit der Spalten (C) reduzierten Untergruppe entspricht,
wobei das erste Interferometer am Ausgang mit einem von der Empfangsoptik gesammelten Teil der zurückgestreuten Strahlung eine Interferenzfigur erzeugt, in der ein Streifen auftritt, der eine laterale Verschiebung hat, die der Doppler-Verschiebung entspricht, wobei der erste optische Sensor (5) derart orientiert ist, dass die Spalten seiner Fotodetektoren-Matrix parallel zur Längsrichtung des Streifens sind,
und wobei der zweite optische Sensor erlaubt, für jede Belichtung des zweiten optischen Sensors (7) mit dem Rückstreusignal die jeweiligen Gesamtintensitäten zweier Lichtflecke gleichzeitig zu messen,
wobei das Steuermodul (8) das System (2) zum Zerhacken in Pulse und den ersten als auch zweiten optischen Sensor (5, 7) so steuert, dass ihre Betriebsabläufe synchronisiert sind, und zwar durch Auslösen einer Sequenz von aufeinanderfolgenden Erfassungen sowohl durch den ersten als auch zweiten optischen Sensor für jeden Puls (I), der emittiert wird.

2. LIDAR-Vorrichtung (10) nach Anspruch 1, in welcher sowohl für den ersten als auch den zweiten optischen Sensor jede Belichtung der Fotodetektoren (60) mit Strahlung während mindestens eines bestimmten Zeitintervalls durchgeführt wird, wobei das Zeitintervall gespeichert ist und als Funktion zumindest einer bestimmten Dicke einer zu analysierenden Atmosphäre (A) geregelt wird.

3. LIDAR-Vorrichtung (10) nach Anspruch 1 oder 2, in welcher sowohl für den ersten als auch den zweiten optischen Sensor die Fotodetektoren (60) fähig sind, jeweils eine Spannung, die repräsentativ für Fotodetektionsladungen ist, zu erzeugen, wobei das Integrationsmodul selektiv die in jeder Zone von Interesse (HC1, HC2) erzeugten Spannungen aufsummiert, wobei jede Zone von Interesse einer bezüglich der Gesamtheit der Zeilen (L) reduzierten Untergruppe entspricht,
oder in welcher das Integrationsmodul vor der Erzeugung der zwei Spannungen mindestens zwei Aufsummierungen von Ladungen durchführt, die jeweils von mindestens zwei verschiedenen ausgedehnten Zonen erzeugt worden sind, die jeweils die zwei Zonen von Interesse (HC1, HC2) abdecken.

4. LIDAR-Vorrichtung (10) nach einem der Ansprüche 1 bis 3, in welcher sowohl für den ersten als auch den zweiten optischen Sensor die Zonen von Interesse (HC1, HC2) vorgegebene und unveränderliche Zonen in der Matrix (M60) sind.

5. LIDAR-Vorrichtung (10) nach einem der Ansprüche 1 bis 4, in welcher sowohl für den ersten als auch den zweiten optischen Sensor jede Zone von Interesse (HC1, HC2) ein Rechteck bildet, das einer gesamten Höhe oder einem Teil einer Höhe der Spalten (C) ihrer spaltenreduzierten Untergruppe entspricht.

6. LIDAR-Vorrichtung (10) nach einem der Ansprüche 1 bis 4, in welcher sowohl für den ersten als auch den zweiten optischen Sensor jede Zone von Interesse (HC1, HC2) eine unterschiedliche Höhe entsprechend den unterschiedlichen Spalten (C) des Bilds und eine unterschiedliche Breite entsprechend den unterschiedlichen Zeilen (L) des Bilds hat.

7. LIDAR-Vorrichtung (10) nach einem der Ansprüche 1 bis 6, in welcher sowohl für den ersten als auch den zweiten optischen Sensor die Zonen von Interesse (HC1, HC2) jeweils unterschiedliche Form haben.

8. LIDAR-Vorrichtung (10) nach einem der Ansprüche 1 bis 3, 4, 6 oder 7, in welcher sowohl für den ersten als auch den zweiten optischen Sensor jede Zone von Interesse (HC1, HC2) eine nichtkonvexe Form hat.

9. LIDAR-Vorrichtung (10) nach einem der Ansprüche 1 bis 5 und 7, wobei sowohl der erste als auch der zweite optische Sensor vom Typ CCD ist und aufweist:
- ein erstes Umgruppierungsregister (RR1), das mit der Matrix (M60) der Fotodetektoren (60) verbunden ist und geeignet ist, für jede Belichtung die Fotodetektionsladungen der Fotodetektoren-Matrix Spalte (C) für Spalte (C) umzugruppieren;
- eine erste Transfermatrix (MT1), die mit dem ersten Umgruppierungsregister (RR1) verbunden ist und geeignet ist, umgruppierte Fotodetektionsladungen, die während aufeinanderfolgender Belichtungen der Matrix (M60) der Fotodetektoren (60) erzeugt worden sind, separat für die Belichtungen zu transferieren;
- eine erste Anhäufungsmatrix (MA1), die mit der ersten Transfermatrix (MT1) verbunden ist und die gleiche Größe wie die erste Transfermatrix hat und geeignet ist, die umgruppierten Fotodetektionsladungen für aufeinanderfolgende Wiederholungen einer von den aufeinanderfolgenden Belichtungen der Matrix (M60) der Fotodetektoren (60) gebildeten Serie anzuhäufen;
- ein erstes Ausleseregister (RL1), das mit Ausgängen von Spalten der ersten Anhäufungsmatrix (MA1) verbunden ist;
- ein zweites Umgruppierungsregister (RR2), das mit der Matrix (M60) der Fotodetektoren (60) verbunden ist und geeignet ist, für jede Belichtung die Fotodetektionsladungen der Fotodetektoren-Matrix Spalte (C) für Spalte (C) umzugruppieren;
- ein drittes Umgruppierungsregister (RR3), das geeignet ist, die von dem zweiten Umgruppierungsregister (RR2) übertragenen Fotodetektionsladungen, die zwei separaten Untergruppen der Spalten (C) der Matrix (M60) der Fotodetektoren (60) entsprechen, in zwei Zellen, genannt Makro-Pixels (RR31, RR32) umzugruppieren;
- eine zweite Transfermatrix (MT2), die mit dem dritten Umgruppierungsregister (RR3) verbunden ist und geeignet ist, Inhalte der Makro-Pixel (RR31, RR32), die während aufeinanderfolgender Belichtungen der Matrix (M60) der Fotodetektoren (60) erzeugt worden sind, separat für die zwei Makro-Pixel zu transferieren;
- eine zweite Anhäufungsmatrix (MA2), die mit der zweiten Transfermatrix (MT2) verbunden ist und die gleiche Größe wie die zweite Transfermatrix hat und geeignet ist, die Inhalte der Makro-Pixel (RR31, RR32) für aufeinanderfolgende Wiederholungen einer von den aufeinanderfolgenden Belichtungen der Matrix (M60) der Fotodetektoren (60) gebildeten Serie anzuhäufen; und
- ein zweites Ausleseregister (RL2), das mit Ausgängen von Spalten der zweiten Anhäufungsmatrix (MA2) verbunden ist.

10. Satellit (S) aufweisend mindestens eine LIDAR-Vorrichtung (10) nach einem der vorstehenden Ansprüche, wobei die LIDAR-Vorrichtung an Bord des Satelliten ist.

11. Verfahren zum Erfassen von Luftströmungsgeschwindigkeitsprofilen von einem Satelliten (S) aus, der sich in einer Umlaufbahn um die Erde (T) befindet, wobei der Satellit dem vorstehenden Anspruch entspricht und das Verfahren die folgenden Schritte aufweist:
- Emittieren von aufeinanderfolgenden Laserpulsen (I) in Richtung Erde (T);
- Sammeln eines zurückgestreuten Teils jedes Laserpulses (I), genannt Rückstreusignal (R), dessen Intensität sich als Funktion einer Zeitdauer, die seit einer Emission des Laserpulses verstrichen ist, ändert, wobei die verstrichene Zeitdauer einer Ausbreitung des Laserpulses und des Rückstreusignals zwischen dem Satelliten (S) und einer geographischen Rückstreuungshöhe in der Erdatmosphäre (A) entspricht;
- für jedes gesammelte Rückstreusignal (R), Verarbeiten des Rückstreusignals, so dass einerseits erste Spektralinformationen, die mit einer Mie-Rückstreuung assoziiert sind, in Form von variablen Positionen eines von einem ersten Interferometer (4) gebildeten Interferenzstreifens erscheinen, wobei die Positionen mehreren ersten Werten der seit der Emission jedes Laserpulses (I) verstrichenen Zeitdauer entsprechen, und so dass andererseits zweite Spektralinformationen, die mit einer Rayleigh-Rückstreuung assoziiert sind, in Form zweier Interferenzflecke jeweils variabler Intensität erscheinen, die mehreren zweiten Werten der seit der Emission jedes Laserpulses (I) verstrichenen Zeitdauer entsprechen; und
- Ableiten eines ersten Luftströmungsgeschwindigkeitsprofils aus den ersten Spektralinformationen und eines zweiten Luftströmungsgeschwindigkeitsprofils aus den zweiten Spektralinformationen.

12. Verfahren nach Anspruch 11, gemäß welchem ferner ausgehend von jeweiligen Intensitäten der zwei Interferenzflecke eine Dichte der streuenden Partikel bestimmt wird.

13. Verfahren nach Anspruch 11 oder 12, gemäß welchem die emittierten Laserpulse (I) eine identifizierte Polarisation haben, und das Verfahren ferner aufweist: Bestimmen eines Intensitätsprozentsatzes des zurückgestreuten Teils jedes Laserpulses, der für eine gekreuzte Polarisation vorhanden ist, auf eine mit der Erfassung des Mie-Kanals und des Rayleigh-Kanals synchrone Weise, wobei die gekreuzte Polarisation orthogonal zu einer Polarisation des zurückgestreuten Teils jedes Laserpulses ist, die der identifizierten Polarisation der emittierten Laserpulse entspricht.

14. Verfahren nach einem der Ansprüche 11 bis 13, gemäß welchem Zeitintervalle, die jeweils mit den Belichtungen der Matrix (M60) der Fotodetektoren (60) für jeden emittierten Laserpuls (I) assoziiert sind, bestimmten Intervallen von geographischen Höhenwerten entlang eines Ausbreitungspfads der Laserpulse (I) in der Erdatmosphäre (A) entsprechen.

## Claims

1. A LIDAR device (10) comprising:
- a laser source (1),
- a system (2) for cutting the radiation that is produced by the laser source (1), into successive pulses,
- an emission optics (3a),
- a receiving optics (3b), which is dedicated to collecting a backscattered part of the radiation of each pulse,
- a first detection channel, which consists of a first interferometer (4) and a first optical sensor (5),
- a second detection channel, which consists of two second interferometers (6a, 6b) and a second optical sensor (7), and
- a control module (8),
wherein the first and second optical sensors (5, 7) are identical and each comprise an array (M60) of photodetectors (60) adapted for capturing successive images, each acquired image being composed of several lines (L) and several columns (C), each photodetector generating, at each exposure to radiation, photodetection charges representative of a number of photons that are received by the photodetector during the exposure, the optical sensor being configured to transform the photodetection charges into representative voltages, each of the first and second optical sensors (5, 7) further comprising:
- firstly, a detection module of at least one column (C), depending on charges accumulated in this column and transformed into representative voltage, said detected column being representative of a location of at least one variable position radiation fringe according to the Mie diffusion, which is formed on said array (M60) of the photodetectors (60); and
- secondly, an integration module adapted to generate at least two voltages respectively representative of the photodetection charges that have been generated respectively by at least two disjointed two-dimensional areas of interest (HC1, HC2) of the array (M60) of photodetectors (60), representative of a detection of a spectral shift of an enlarged Rayleigh line, each area of interest corresponding to a subset reduced at least with respect to all of the columns (C),
wherein the first interferometer outputs, from a portion of the backscattered radiation that has been collected by the receiving optics, an interference figure in which a fringe appears with a lateral offset that corresponds to the Doppler offset, the first optical sensor (5) being oriented such that the columns of its photodetector array are parallel to the longitudinal direction of the fringe,
and wherein the second optical sensor makes it possible to simultaneously measure the respective total intensities of two light spots, for each exposure of the second optical sensor (7) to backscatter signal,
the control module (8) driving the system for cutting into pulses (2) and each of the first and second optical sensors (5, 7) according to operations that are synchronised, by triggering a sequence of successive acquisitions by each of said first and second optical sensors for each pulse (I) which is emitted.

2. The LIDAR device (10) according to claim 1, wherein for each of the first and second optical sensors, each exposure of the photodetectors (60) to the radiation is performed for at least a determined time interval, said time interval being stored and adjusted according to at least one determined thickness of atmosphere (A) to be analysed.

3. The LIDAR device (10) according to claim 1 or 2, wherein for each of the first and second optical sensors, the photodetectors (60) are able to each generate their voltage representative of the photodetection charges, the integration module selectively summing the voltages generated in each area of interest (HC1, HC2), where each area of interest corresponds to a subset also reduced with respect to all the lines (L),
or wherein the integration module performs at least two summations of charges generated respectively by at least two different extended areas respectively covering said two areas of interest (HC1, HC2), prior to the generation of said two voltages.

4. The LIDAR device (10) according to one of claims 1 to 3, wherein for each of the first and second optical sensors, the areas of interest (HC1, HC2) are predetermined and invariable areas in the array (M60).

5. The LIDAR device (10) according to one of claims 1 to 4, wherein for each of the first and second optical sensors, each area of interest (HC1, HC2) forms a rectangle corresponding to all or part of a height of the columns (C) of their reduced subset of columns.

6. The LIDAR device (10) according to one of claims 1 to 4, wherein for each of the first and second optical sensors, each area of interest (HC1, HC2) has different heights corresponding to the different columns (C) of the image, and has different widths corresponding to the different lines (L) of the image.

7. The LIDAR device (10) according to one of claims 1 to 6, wherein for each of the first and second optical sensors, the areas of interest (HC1, HC2) have respective shapes that are different.

8. The LIDAR device (10) according to one of claims 1 to 3, 4, 6 or 7, wherein for each of the first and second optical sensors, each area of interest (HC1, HC2) has a non-convex shape.

9. The LIDAR device (10) according to one of claims 1 to 5 and 7, wherein each of the first and second optical sensors is of the CCD type and comprises:
- a first grouping register (RR1), connected to the array (M60) of the photodetectors (60) and adapted to group the photodetection charges by columns (C) of said array of photodetectors, for each exposure;
- a first transfer array (MT1), connected to the first grouping register (RR1) and adapted to transfer grouped photodetection charges that have been generated during successive exposures of the array (M60) of the photodetectors (60), separately for said exposures;
- a first accumulation array (MA1), connected to the first transfer array (MT1) and of the same size as said first transfer array, and adapted to accumulate the grouped photodetection charges for successive repetitions of a series formed by the successive exposures of the array (M60) of the photodetectors (60);
- a first reading register (RL1), connected to column outputs of the first accumulation array (MA1);
- a second grouping register (RR2), connected to the array (M60) of the photodetectors (60) and adapted to group the photodetection charges by columns (C) of said array of the photodetectors, for each exposure;
- a third grouping register (RR3), adapted to group into two cells, called macro-pixels (RR31, RR32), the photodetection charges transmitted by the second grouping register (RR2) in accordance with two separate subsets of the columns (C) of the array (M60) of the photodetectors (60);
- a second transfer array (MT2), connected to the third grouping register (RR3) and adapted to transfer contents of the macro-pixels (RR31, RR32) that were generated during successive exposures of the array (M60) of the photodetectors (60), separately for said two macro-pixels;
- a second accumulation array (MA2), connected to the second transfer array (MT2) and of the same size as said second transfer array, and adapted to accumulate the contents of the macro-pixels (RR31, RR32) for successive repetitions of a series formed by the successive exposures of the array (M60) of the photodetectors (60); and
- a second reading register (RL2), connected to column outputs of the second accumulation array (MA2).

10. A satellite (S) comprising at least one LIDAR device (10) according to one of the preceding claims, the LIDAR device being on board the satellite.

11. A method for capturing air flow velocity profiles from a satellite (S) that is in orbit around the Earth (T), the satellite being according to the preceding claim and the method comprising the following steps:
- emitting successive laser pulses (I) in the direction of the Earth (T);
- collecting a backscattered part of each laser pulse (I), called backscattering signal (R) and having a variable intensity depending on a time elapsed from an emission of the laser pulse, the time elapsed corresponding to a propagation of the laser pulse and the backscattering signal between the satellite (S) and a backscattering altitude in the Earth's atmosphere (A);
- for each backscattering signal (R) that is collected, processing said backscattering signal firstly so that first spectral information, associated with a Mie backscattering, appears in the form of variable positions of an interference fringe formed by a first interferometer (4), which relate to several first values of the time elapsed from the emission of each laser pulse (I), and secondly so that second spectral information, associated with a Rayleigh backscattering, appears in the form of two interference spots of variable respective intensities, which relate to several second values of the time elapsed from the emission of each laser pulse; and
- deducing a first air flow velocity profile from the first spectral information, and a second air flow velocity profile from the second spectral information.

12. The method according to claim 11, wherein a density of scattering particles is further determined from the respective intensities of both interference spots.

13. The method according to claim 11 or 12, wherein the laser pulses (I) that are emitted have an identified polarisation, and the method further comprises determining, in a manner synchronous with the acquisition of the Rayleigh and Mie channels, an intensity ratio of the backscattered portion of each laser pulse that exists for a cross-polarisation, said cross-polarisation being orthogonal to a polarisation of said backscattered portion of each laser pulse that corresponds to the identified polarisation of the laser pulses emitted.

14. The method according to any one of claims 11 to 13, wherein time intervals associated respectively with the exposures of the array (M60) of the photodetectors (60) for each laser pulse (I) which is emitted correspond to determined intervals of altitude values, along a propagation path of the laser pulses (I) in the Earth's atmosphere (A).
